(19) **Europäisches Patentamt / European Patent Office / Office européen des brevets**

(11) **EP 4 453 074 B1**

(12) **EUROPEAN PATENT SPECIFICATION**

(45) Date of publication and mention of the grant of the patent:
**29.04.2026 Bulletin 2026/18**

(21) Application number: **22840610.4**

(22) Date of filing: **19.12.2022**

(51) International Patent Classification (IPC):
*C08J 11/02* (2006.01)    *D06P 5/13* (2006.01)
*B29B 17/02* (2006.01)    *D06P 1/62* (2006.01)
*D06P 1/651* (2006.01)    *B01D 11/00* (2006.01)

(52) Cooperative Patent Classification (CPC):
**C08J 11/02; B01D 11/0288; B29B 17/02;**
B29B 17/0412; B29B 2017/0293; B29B 2017/0476;
B29K 2105/0032; C08J 2367/02

(86) International application number:
**PCT/EP2022/086618**

(87) International publication number:
**WO 2023/117882 (29.06.2023 Gazette 2023/26)**

(54) **PROCESS FOR DISCOLORATION OF A COLORED POLYMERIC MATERIAL**

VERFAHREN ZUR VERFÄRBUNG EINES GEFÄRBTEN POLYMERMATERIALS

PROCÉDÉ DE DÉCOLORATION D'UN MATÉRIAU POLYMÈRE COLORÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.12.2021 EP 21216025**

(43) Date of publication of application:
**30.10.2024 Bulletin 2024/44**

(73) Proprietor: **BASF SE**
**67056 Ludwigshafen am Rhein (DE)**

(72) Inventors:
• **WITZEL, Sina**
**67056 Ludwigshafen am Rhein (DE)**
• **MANGOLD, Hannah Stephanie**
**67056 Ludwigshafen am Rhein (DE)**
• **REIN, Christian**
**67056 Ludwigshafen am Rhein (DE)**
• **THIEL, Indre**
**67056 Ludwigshafen am Rhein (DE)**

(74) Representative: **BASF IP Association**
**BASF SE**
**GBI - Z078**
**67056 Ludwigshafen (DE)**

(56) References cited:
**EP-A1- 2 868 800**    **GB-A- 2 528 494**
**US-A1- 2006 070 188**    **US-A1- 2008 255 259**
**US-A1- 2020 270 790**

• **CHEN WENJUN ET AL: "Biomass-derived [gamma]-valerolactone: efficient dissolution and accelerated alkaline hydrolysis of polyethylene terephthalate", GREEN CHEMISTRY, vol. 23, no. 11, 9 June 2021 (2021-06-09), GB, pages 4065 - 4073, XP055929194, ISSN: 1463-9262, DOI: 10.1039/D1GC00665G**

Remarks:
The file contains technical information submitted after the application was filed and not included in this specification

**Description**

In a first aspect, the invention relates to a process for discoloration of a colored polymeric material comprising: (i) providing a colored polymeric material and providing a solvent comprising gamma-valerolactone; (ii) contacting the colored polymeric material with a solvent comprising gamma-valerolactone at a temperature in the range of from 40 to 170°C, thereby obtaining a solvent, which is enriched in colorant compared to the solvent provided in (i), and a polymeric material, which is depleted in colorant compared to the colored polymeric material provided in (i). Herein, also a polymeric material is disclosed, which is depleted in colorant obtained or obtainable from the process of the first aspect. Also disclosed is a use of the polymeric material, which is depleted in colorant for textile applications, fiber applications, packaging applications or plastic applications. A second aspect of the invention is related to a process for preparing a textile or a packaging.

The demand for polymeric materials has drastically increased over the last decades. However, the poor biodegradability has led to large amounts of plastic waste which is not easy to dispose of. Polymeric materials have been used extensively in the packaging sector, for example, in beverage packaging or food packaging. The vast majority of food and drink today is packaged within plastic bottles and containers, made from, for example, polymeric materials comprising polyethylene terephthalate (PET). As these materials typically have poor biodegradability and are also still valuable products, it is desirable for these plastics to be recovered and recycled.

Although recycling processes have been adopted to convert these waste materials into new production materials, there are still many problems associated with recycling and recovery of polymeric materials, especially, if the polymeric materials are colored. Waste packaging often includes a mixture of different polymeric materials containing a plurality of colorants. The same applies also for textiles, which also comprise a high amount of colored polymeric materials. Therefore, in order to recycle these materials, it is common to separate polymeric materials based on their color. However, this sorting process is labor intensive and/or requires the use of sorting machines. Further, the different colored polymeric materials are commonly processed separately, requiring multiple recycling processes to be performed in parallel.

Another approach for recovery of polymeric materials includes the dissolving of the polymeric material. WO 2016/12755 A1 discloses an extraction of polyesters from packaging, wherein a first solvent is used for removal of colorants and a second solvent is used to dissolve the polyester. Chen et al. (Wenjun Chen, Yuechao Yang, Xue Lan, Baolong Zhang, Xiaogang Zhang and Tiancheng Mu in Green Chem., 2021, 23, 4065) describe a process for dissolution and accelerated alkaline hydrolysis of PET. A recycling of multilayer plastic packaging materials by solvent-targeted recovery and precipitation is described by Walker et al. (Theodore W. Walker, Nathan Frelka, Zhizhang Shen, Alex K. Chew, Jesse Banick, Steven Grey, Min Soo Kim, James A. Dumesic, Reid C. Van Lehn, George W. Huber in Sci. Adv. 2020; 6 : eaba7599 20 November 2020). GB 2528494 A discloses a process for extracting polyester from fabric, in particular fabric comprising polyester and one or more dyes. The process comprises inter alia a step of contacting the fabric with a first solvent system, which is used to dissolve the dyes and to remove the dissolved dyes, and a step of polyester dissolution. Even if methods are thus known to remove dyes from a polymeric material such as a polyester, the solvents used for that purpose bear the problem that they are hazardous, such as 3-dimethyl-2-imidazolinone (DMI) or N-methyl-2-pyrollidone (NMP). Furthermore, the known processes always require a dissolution of the polymeric material with subsequent precipitation. Especially for PET, a direct recycling was so far only known via the dissolution/ precipitation method, which converts the waste PET into almost pure PET powder by dissolving the waste PET in a suitable solvent followed by re-precipitation of the PET by adding an anti-solvent.

The object underlying the present invention was thus the provision of an improved process, which enables a simple discoloration of a polymeric material without the need for dissolving the polymeric material and which uses a non-hazardous solvent.

1 st aspect - process for discoloration of a colored polymeric material

According to a first aspect, the invention relates thus to a process for discoloration of a colored polymeric material comprising:

(i) providing a colored polymeric material and providing a solvent comprising gamma-valerolactone;
(ii) contacting the colored polymeric material with a solvent comprising gamma-valerolactone at a temperature in the range of from 40 to 160°C, thereby obtaining a solvent, which is enriched in colorant compared to the solvent provided in (i), and a polymeric material, which is depleted in colorant compared to the colored polymeric material provided in (i);

wherein the polymeric material is a polyethylene terephthalate (PET) based polymeric material, which comprises in the range of from 30 to 100 weight-% PET, the total weight of the polymeric material being 100 weight-%.

Gamma-valerolactone ($C_5H_8O_2$; IUPAC: 5-methyloxolan-2-one, abbreviation: GVL) is obtainable from carbohydrate-based biomasses, for example, it is readily obtained from sugar, and is thus a "green" solvent. It had so far only been described at the outmost as being able to dissolve polymeric materials. It has now been surprisingly found that, especially for polymeric materials comprising polyethylene terephthalate (PET), gamma-valerolactone enables a discoloration of the polymeric material without dissolution of the polymeric material happening or being required. The discoloration works quite well for different colorants, in thus, for example, different textile materials having colors such as yellow, green, blue, red, black and a diversity of mixtures of these colors, can all be discolored resulting in a white or almost white polymeric material, without any substantial loss with respect to the polymeric material itself. Even optical brighteners could be successfully removed without damaging the polymeric material itself, which could be shown with respect to the removal of optical brighteners based on a comparison of intensity of emitted fluorescence radiation. Remarkably, the polymeric material is only depleted in colorant, be it any kind of dye or optical brightener, but neither dissolved nor otherwise modified, i.e. the polymeric material obtained in (ii), which is depleted in colorant compared to the colored polymeric material provided in (i), has about the same number average molecular weight Mn(ii) and the same mass average molecular weight Mw(ii) as the colored polymeric material provided in (i) and has the same amount of polymeric material as the colored polymeric material provided in (i) as shown by, for example, quantitative $^1$H-NMR.

"Contacting" in step (ii) preferably means that the colored polymeric material is at least partially immersed in the solvent. Preferably, the polymeric material is at least partially immersed in the solvent in that at least 60 %, more preferably at least 70 %, more preferably at least 80 %, more preferably at least 90 %, more preferably at least 95 %, more preferably at least 99 % of the polymeric material's surface are in contact with the solvent, based on the total surface of the polymeric material being 100%.

Generally, no specific restrictions exist regarding the conditions under which the contacting in (i) takes place provided that an efficient discoloration takes place.

In some preferred embodiments of the process for discoloration, the contacting in (ii) is done at a pressure in the range of from 800 to 200,000 hPa.

According to the inventive process for discoloration, the contacting in (ii) is done at a temperature in the range of from 60 to 160°C, preferably in the range of from 80 to 130°C, more preferably in the range of from 80 to < 120°C and preferably at a pressure in the range of from 800 to 1200 hPa, more preferably in the range of from 900 to 1100 hPa, more preferably in the range of from 1000 to 1100 hPa.

According to the inventive process for discoloration, the contacting in (ii) is done at a temperature in the range of from 40 to 160°C, preferably in the range of from 40 to 130°C, more preferably in the range of from 40 to < 120°C and preferably at a pressure in the range of from 1013 to 200,000 hPa, preferably in the range of from 1013 to 100,000 hPa.

In some preferred embodiments of the process for discoloration, the contacting in (ii) is done for a period of time of at least 0.1 hours, more preferably in the range of from 0.1 to 48 hours, more preferably in the range of from 0.1 to 24 hours, more preferably in the range of from 0.1 to 12 hours, more preferably in the range of from 0.1 to 8 hours, more preferably in the range of from 0.5 to 6 h, more preferably in the range of from 0.5 to 5 h, more preferably in the range of from 1 to 6 hours, more preferably in the range of from 1 to 5 hours.

In some preferred embodiments of the process for discoloration, the solvent comprises gamma-valerolactone and optionally one or more solvent(s) selected from the group consisting of water and organic solvents having a log $K_{OW}$ in the range of from -1.6 to +1.6, more preferably selected from the group consisting of water, C5 to C12 alkane, aliphatic C1 to C10 alcohol, C3 to C10 ketone, C2 to C10 cyclic ketone, HO-[C1 to C10 alkyl-O-]$_n$-H, with n being an integer in the range of from 2 to 1000, C1 to C10 alkyl-O-C3 to C10 alkyl ether, C3 to C10 cyclic ether, optionally substituted with one or more C1 to C6 alkyl group(s), C6 to C10 aromatic hydrocarbon, optionally substituted with one or more C1 to C6 alkyl group(s), C2 to C10 aliphatic ester, C8 to C11 aromatic ester, C5 to C10 cyclic carboxylic ester (lactone), C3 to C12 amide, preferably $R^1R^2N-C(=O)-R^3$, wherein $R^1$, $R^2$ are independently a C1 to C4 alkyl group and $R^3$ is selected from the group consisting of C1 to C9 alkyl group, C1 to C10 ester group and C1 to C6 ether group, C3 to C6 lactame, optionally substituted with one or more substituent selected from C1 to C6 alkyl group, C1 to C6 ester group and C1 to C6 ether group, and C5 imidazolidine, optionally substituted with one or more C1 to C6 alkyl group(s), C5 to C7 imidazolidone, optionally substituted with one or more C1 to C6 alkyl group(s), wherein preferably at least 1 weight-%, more preferably at least 5 weight-%, more preferably at least 10 weight-%, more preferably at least 20 weight-%, more preferably at least 30 weight-%, more preferably at least 40 weight-%, more preferably at least 50 weight-%, more preferably at least 60 weight-%, more preferably at least 70 weight-%, more preferably at least 80 weight-%, more preferably at least 90 weight-%, more preferably at least 95 weight-% of the solvent consists of gamma-valerolactone, based on the total weight of the solvent being 100 weight-%.

Suitable solvents are known to the skilled person, as well as the decadic logarithm of the octanol-water partition coefficient (log $K_{OW}$). The octanol-water partition coefficient $K_{OW}$ of a given compound is defined as the ratio of said compound's chemical concentration in the octanol phase relative to said compound's chemical concentration in the aqueous phase in a two-phase system of 1-octanol and water at a temperature of 25 °C (298 K). Methods to determine the octanol-water partition coefficient $K_{OW}$ of a given compound are known to the skilled person. For example, the octanol-water partition coefficient $K_{OW}$ of a given compound is determined using the shake-flask method which consists of dissolving the compound in a volume of high-purity 1-octanol and deionized water (pre-mixed and calibrated for at least 24 h) and measuring the concentration of the compound in each the 1-octanol phase and the water phase by a sufficiently exact method, preferably via UV/VIS spectroscopy. This method is described in the OECD Guideline for the testing of chemicals, number 107, adopted on July 27th, 1995. Values of KOW for a plurality of substances are known and are easy to be found, for example, in the Dortmund Database (DDB, cf. http://www.ddbst.com/ddb-search).

Regarding suitable solvents, for example, an aliphatic C1 to C10 alcohol is preferably a C1 to C6 monool, more preferably one or more selected from the group consisting of methanol, ethanol and butanol. A C3 to C10 ketone is preferably acetone or methylethyl ketone or a mixture of acetone and methylethyl ketone. A C2 to C10 cyclic ketone is preferably cyclohexanone. A C3 to C10 cyclic ether optionally substituted with one or more C1 to C3 alkyl group(s) is preferably tetrahydrofuran or 2-methyltetrahydrofuran or a mixture of tetrahydrofuran and 2-methyltetrahydrofuran. A C6 to C10 aromatic hydrocarbon, optionally substituted with one or more C1 to C3 alkyl group(s) is preferably one or more selected from the group consisting of benzene, toluene, ethylbenzene, xylene (o or p) and mesitylene. A C1 to C10 ester is preferably one or more selected from the group consisting of esters of a C1 to C6 aliphatic monool with a C2 to C5 aliphatic acid. A C5 to C10 cyclic carboxylic ester (lactone) is preferably one or more selected from the group consisting of delta-valerolactone, methylated $\gamma$-butyrolactone, ethylated $\gamma$-butyrolactone, propylated $\gamma$-butyrolactone, and $\beta$-propiolactone. A C3 to C6 lactame, optionally substituted with one or more C1 to C3 alkyl group(s), is preferably selected from the group consisting of 2-pyrrolidone, 3-pyrrolidone and mixtures of 2-pyrrolidone, 3-pyrrolidone, each optionally substituted with one or more C1 to C3 alkyl group(s), preferably at the nitrogen atom, more preferably N-methyl-2-pyrollidone. An imidazolidone, optionally substituted with one or more C1 to C3 alkyl group(s) is preferably 1,3-dimethyl-2-imidazolidinone.

In some preferred embodiments of the process for discoloration, the solvent comprises water and gamma-valerolactone, preferably in a weight based ratio water: gamma-valerolactone in the range of from 1:10 to 10:1, more preferably in the range of from 1:2 to 1:5, more preferably in the range of from 1:1 to 1:3. Preferably, in these preferred embodiments, the contacting in (ii) is done at a temperature in the range of from 60 to 99°C, preferably in the range of from 80 to 95°C. Preferably, in these preferred embodiments, at least 80 weight-%, preferably at least 90 weight-%, more preferably at least 95 weight-%, more preferably at least 99 weight-% of the solvent consist of gamma-valerolactone, based on the total weight of the solvent.

In some preferred embodiments of the process for discoloration, the contacting in (ii) is done with a in mass based ratio colored polymeric material : solvent in the range of 1:1 to 1:100, more preferably in the range of from 1:1 to 1:20.

In some preferred embodiments of the process for discoloration, depleted in colorant regarding the polymeric material obtained in (ii) means that the L*a*b* values of the polymeric material, which is depleted in colorant compared to the polymeric material provided in (i), change in that:

the absolute value of a* changes, preferably by at least 0.2; and/or, preferably and,
the absolute value of b* changes, preferably by at least 0.2; and/or, preferably and,
the L* value increases, preferably by at least 4,
each compared to the L*a*b* values of the colored polymeric material provided in (i), wherein L*a*b* values are determined according to DIN 5033 and DIN EN ISO 11664-1.6.

The expression "irrespective of the color" means that, even if analytics are normally done for materials of each color separately, the definitions given above apply for single colored polymeric materials, but also for polymeric materials having a plurality of colors and mixtures of pieces of polymeric materials, wherein each piece has its own color or its own color mix.

The condition of being "depleted in colorant", which is expressed above based on quantitative L*a*b* values is also identifiable visually by the eye: The polymeric material provided in (i) has a certain color, wherein the polymeric material obtained in (ii) is lighter and whiter respectively. This applies especially for all colorants not being optical brighteners. Depleted in colorant regarding the polymeric material obtained in (ii) means, especially with respect to optical brighteners being the colorant, that the intensity of emitted fluorescence radiation (emission), preferably in the range of from 400 to 600 nm, is reduced for the polymeric material obtained in (ii) when irradiated with light with a wavelength in the range of from 250 to 400 nm compared to the intensity of emitted fluorescence radiation (emission), preferably in the range of from 400-600 nm, of the polymeric material provided in (i).

Methods for determination of the intensity of emitted fluorescence radiation are known to the skilled person, for example, the determination can be made visually by using an UV lamp, by fluorescence determination or determination of quantum yield.

The polymeric material is only depleted in colorant but neither dissolved nor otherwise modified. Preferably, the polymeric material obtained in (ii), which is depleted in colorant compared to the colored polymeric material provided in (i), has about the same number average molecular weight Mn(ii) and the same mass average molecular weight Mw(ii) as the colored polymeric material provided in (i), i.e. Mn(ii) is in the range of from 90 to 110 %, preferably in the range of from 95 to 100 % of Mn(i) and Mw(ii) is in the range of from 90 to 110 %, preferably in the range of from 95 to 100 % of Mw(i).

In some preferred embodiments, the process for discoloration as described above comprises:

(iii) separating the solvent being enriched in colorant as obtained in (ii) from the polymeric material, which is depleted in colorant as obtained in (ii), thereby obtaining a separated solvent being enriched in colorant and a separated polymeric material, which is depleted in colorant compared to the polymeric material provided in (i).

In some preferred embodiments, the process for discoloration as described above comprises:

(iv-a) separating the colorant and the solvent being enriched in colorant obtained in (iii), preferably by a physical separation method, more preferably by a thermal based separation method, more preferably by distillation, and/or by a solubility-based separation method, more preferably by adsorption, thereby obtaining a solvent being depleted of colorant compared to the solvent being enriched in colorant as obtained in (ii).

In some preferred embodiments, the process for discoloration as described above comprises recycling the solvent being depleted of colorant as obtained in (iv-a) and/or the separated solvent being enriched in colorant obtained in (iii) at least partially to (i).

In some preferred embodiments, the process for discoloration as described above comprises:

(iv-b) washing the separated polymeric material obtained in (iii) with a washing solvent comprising gamma-valerolactone and optionally one or more solvent(s) selected from the group consisting of water and organic solvents having a $logK_{OW}$ in the range of from -1.6 to +1.6, preferably selected from the group consisting of water, C5 to C12 alkane, aliphatic C1 to C10 alcohol, C3 to C10 ketone, C2 to C10 cyclic ketone, $HO-[C1$ to C10 $alkyl-O-]_n-H$, with n being an integer in the range of from 2 to 1000, C1 to C10 alkyl-O-C3 to C10 alkyl ether, C3 to C10 cyclic ether, optionally substituted with one or more C1 to C6 alkyl group(s), C6 to C10 aromatic hydrocarbon, optionally substituted with one or more C1 to C6 alkyl group(s), C2 to C10 aliphatic ester, C8 to C11 aromatic ester, C5 to C10 cyclic carboxylic ester (lactone), C3 to C12 amide, preferably $R^1R^2N-C(=O)-R^3$, wherein $R^1$, $R^2$ are independently a C1 to C4 alkyl group and $R^3$ is selected from the group consisting of C1 to C9 alkyl group, C1 to C10 ester group and C1 to C6 ether group, C3 to C6 lactame, optionally substituted with one or more substituent selected from C1 to C6 alkyl group, C1 to C6 ester group and C1 to C6 ether group, C5 imidazolidine, optionally substituted with one or more C1 to C6 alkyl group(s), and C5 to C7 imidazolidone, optionally substituted with one or more C1 to C6 alkyl group(s), thereby obtaining a first washed polymeric material, which is depleted in colorant compared to the polymeric material provided in (i);

(iv-c) optionally washing the first washed polymeric material, which is depleted in colorant compared to the polymeric material provided in (i), obtained in (iv-b) thereby obtaining a second washed polymeric material, which is depleted in colorant compared to the polymeric material provided in (i);

(iv-d) optionally drying the first washed polymeric material, which is depleted in colorant compared to the polymeric material provided in (i) or the second washed polymeric material, which is depleted in colorant compared to the polymeric material provided in (i);

wherein optionally (iv-b) and/or (iv-c) are repeated at least once before (iv-d) is conducted.

In some preferred embodiments of the process for discoloration at least (ii) is conducted in continuous manner or discontinuous manner. According to this embodiment, step (ii) is either carried out under a flow of the solvent comprising gamma-valerolactone (continuous manner) or in a stationary mode (discontinuous manner, batch mode). The contacting is done in one or more vessel(s), for example, one or more vessels are filled with colored polymeric material and the solvent comprising gamma-valerolactone is directed through this vessel/these vessels with a specific flow. A preferred example is a, preferably stirred, vessel cascade.

In some preferred embodiments of the process for discoloration at least (ii) is in counter current mode. According to this embodiment, step (ii) is carried out in counter current mode. For example, if the contacting of step (ii) is done within a vessel, the solvent comprising gamma-valerolactone enters the vessel from one direction (either side or top/bottom) and the colored polymeric material enters the vessel from an another, preferably an opposite, direction. In a preferred constellation wherein a vertically arranged vessel is used, the solvent comprising gamma-valerolactone enters the vessel from the bottom and the polymeric material enters the vessel from the top.

In some preferred embodiments of the process for discoloration at least (ii) is conducted under mechanical intermixing, wherein mechanical intermixing preferably comprises one or more methods selected from stirring, blending, and ultra sound.

As indicated above for the inventive process for discoloration the polymeric material is a polyethylene terephthalate (PET) based polymeric material, which comprises in the range of from 30 to 100 weight-% PET, preferably in the range of from 50 to 100 weight-% PET, more preferably in the range of from 60 to 100 weight-% PET, more preferably in the range of from 70 to 100 weight-% PET, wherein the total weight of the polymeric material is 100 weight-%.

As indicated above for the inventive process for discoloration, the polymeric material is a polyethylene terephthalate (PET) based polymeric material, which comprises in the range of from 30 to 100 weight-% PET, preferably in the range of from 50 to 100 weight-% PET, more preferably in the range of from 60 to 100 weight-% PET, more preferably in the range of from 70 to 100 weight-% PET, and optionally one or more further polymer(s) selected from the group consisting of polyacryl nitrile (PAN), polyamide (PA), polybutylene terephthalate (PBT), polytetramethylene ether glycol (Poly-THF), polyurethane (PU), polyethylene glycol (PEG), polypropylene glycol (PPG), polyglycolic acid (PGA), polystyrene (PS), styrene-butadiene rubber (SBR), polyvinylchlorid (PVC), polyethersulfone (PES), polyether ether ketone (PEEK), polyethylenenaphthalate (PEN), polycarbonate (PC), polylactic acid (PLA), acrylonitrile butadiene styrene (ABS), polyacrylic acids and esters (PAA) / poly(methyl methacrylate) (PMMA), polyoxymethylen (POM), polycaprolactone (PCL), polyethylene adipate (PEA), polytrimethylene terephthalate (PTT), polyhydroxyalkanoate (PHA), and copolymers of two or more of these polymeric materials, wherein the total weight of the polymeric material are 100 weight-%.

As indicated above for the inventive process, the polymeric material is a polyethylene terephthalate (PET) based polymeric material, which comprises in the range of from 30 to 100 weight-% PET, preferably in the range of from 50 to 100 weight-% PET, more preferably in the range of from 60 to 100 weight-% PET, more preferably in the range of from 70 to 100 weight-% PET, and one or more polymer(s) selected from PC, PES and PLA and copolymer(s) of PU and PEG and/or PPG and/or pTHF, wherein the total weight of the polymeric material are 100 weight-%. More preferably, the polymeric material is a polyethylene terephthalate (PET) based polymeric material, which comprises in the range of from 30 to 100 weight-% PET, preferably in the range of from 50 to 100 weight-% PET, more preferably in the range of from 60 to 100 weight-% PET, more preferably in the range of from 70 to 100 weight-% PET, and one or more copolymer(s) selected from PU and PEG and/or PPG and/or pTHF, wherein the total weight of the polymeric material is 100 weight-%.

In some preferred embodiments of the process for discoloration the colorant is selected from the group consisting of dye and optical brightener and mixtures of dye and optical brightener. A "colorant" is a substance that cause the change of color impression of material. This comprises dyes, which absorb wavelength intervals of visible light (400 to 780 nm) and optical brighteners, which amplify the light emission of a material through UV light adsorption and emittance of visible light (through fluorescence), i.e. an optical brightener converts radiation that is not visible to the human eye (<400nm) into visible fluorescence radiation of the blue-red spectral range (400 to 600 nm). Colorants usable or used for changing the color impression of polymeric materials are known to the skilled person. In the context of the present invention, the term "dye" means any kind of dye such as dye, pigment, dispersion, wherein a dye is, for example, one or more selected from the group consisting of acid dye, basic dye, direct dye, disperse dye, azoic dye, food dye, solvent dye, organic dye, inorganic dye, organic pigment, inorganic pigment, disperse ink, reactive ink, oxidation dye, reactive dye, sulfur dye, mordant dye and vat dye. The term "optical brightener" comprises optical brightening agents, fluorescent brightening agents, and fluorescent whitening agents.

Overviews of colorants for polymeric materials can be found, for example, in "Dyes and Pigments" Metin Agikyildiz, Kübra Günes, Ahmet Gürses Springer, 2016 (ISBN: 10 : 3319338900); Industrial Organic Pigments - Klaus Hunger, Thomas Heber, Martin U. Schmidt, Friedrich Reisinger, Stefan Wanne Wiley-VCH, 4th edition, 2018 (ISBN: 978-3-527-32608-2); Chemistry and Technology of Natural and Synthetic Dyes and Pigments - Ashis Kumar Samanta, Nasser Awwad, IntechOpen, 2020 (ISBN: 9781789859980, 9781789859973, 9781839687587); Encyclopedia of Color, Dyes, Pigments - Volume 1, Gerhard Pfaff, de Gruyter, 2021 (ISBN: 311058588X); Heinrich Zollinger: Color Chemistry: Syntheses, Properties, and Applications of Organic Dyes and Pigments. 3rd edition. WILEY-VCH Verlag, Weinheim 2003 (ISBN: 3-906390-23-3); Klaus Hunger (Ed.): Industrial Dyes: Chemistry, Properties, Applications. WILEY-VCH Verlag, Weinheim 2003 (ISBN: 3-662-01950-7); Hermann Rath: Lehrbuch der Textilchemie. einschl. der textilchemischen Technologie. 2nd edition. Springer-Verlag, Berlin, Heidelberg 1963 (ISBN: 978-3-662-00065-6); Wilfried Kratzert, Rasmus Peichert: Farbstoffe. Quelle & Meyer, Heidelberg 1981 (ISBN: 3-494-01021-8); Ullmann's Encyclopedia of industrial chemistry, Wiley-VCH, 2000, sections "dyes and pigments" and "dyes, general survey" (ISBN: 9783527303854).

In some preferred embodiments, the process for discoloration comprises:

(i) providing a colored polymeric material and providing a solvent comprising gamma-valerolactone;

(ii) contacting the colored polymeric material with a solvent comprising gamma-valerolactone at a temperature in the range of from 60 to 160°C and at a pressure in the range of from 800 to 1200 hPa, thereby obtaining a solvent, which is enriched in colorant compared to the solvent provided in (i), and a polymeric material, which is depleted in colorant compared to the colored polymeric material provided in (i).

(iii) optionally separating the solvent being enriched in colorant as obtained in (ii) from the polymeric material, which is depleted in colorant as obtained in (ii), thereby obtaining a separated solvent being enriched in colorant and a separated polymeric material, which is depleted in colorant compared to the polymeric material provided in (i);

(iv-a) optionally separating the colorant from the solvent being enriched in colorant obtained in (iii), preferably by a physical separation method, more preferably by distillation, thereby obtaining a solvent being depleted of colorant compared to the solvent being enriched in colorant as obtained in (ii); optionally comprising recycling the solvent being depleted of colorant as obtained in (iv-a) and/or the separated solvent being enriched in colorant obtained in (iii) at least partially to (i);

(iv-b) optionally washing the separated polymeric material obtained in (iii) with a washing solvent comprising gamma-valerolactone and optionally one or more solvent(s) selected from the group consisting of water and organic solvents having a $\log K_{OW}$ in the range of from - 1.6 to +1.6, preferably selected from the group consisting of water, C5 to C12 alkane, aliphatic C1 to C10 alcohol, C3 to C10 ketone, C2 to C10 cyclic ketone, HO-[C1 to C10 alkyl-O-]$_n$-H, with n being an integer in the range of from 2 to 1000, C1 to C10 alkyl-O-C3 to C10 alkyl ether, C3 to C10 cyclic ether, optionally substituted with one or more C1 to C6 alkyl group(s), C6 to C10 aromatic hydrocarbon, optionally substituted with one or more C1 to C6 alkyl group(s), C2 to C10 aliphatic ester, C8 to C11 aromatic ester, C5 to C10 cyclic carboxylic ester (lactone), C3 to C12 amide, preferably $R^1R^2N\text{-}C(=O)\text{-}R^3$, wherein $R^1$, $R^2$ are independently a C1 to C4 alkyl group and $R^3$ is selected from the group consisting of C1 to C9 alkyl group, C1 to C10 ester group and C1 to C6 ether group, C3 to C6 lactame, optionally substituted with one or more substituent selected from C1 to C6 alkyl group, C1 to C6 ester group and C1 to C6 ether group, C5 imidazolidine, optionally substituted with one or more C1 to C6 alkyl group(s), and C5 to C7 imidazolidone, optionally substituted with one or more C1 to C6 alkyl group(s), thereby obtaining a first washed polymeric material, which is depleted in colorant compared to the polymeric material provided in (i);

(iv-c) optionally washing the first washed polymeric material, which is depleted in colorant compared to the polymeric material provided in (i) obtained in (iv-b) thereby obtaining a second washed polymeric material, which is depleted in colorant compared to the polymeric material provided in (i).

(iv-d) optionally drying the first washed polymeric material, which is depleted in colorant compared to the polymeric material provided in (i) or the second washed polymeric material, which is depleted in colorant compared to the polymeric material provided in (i);

wherein optionally (iv-b) and/or (iv-c) are repeated at least once before (iv-d) is conducted;

wherein the polymeric material is PET or a mixture of PET with a copolymer of PU and/or PEG and/or PPG and/or pTHF, wherein the PET content is in the range of from 30 to 100 weight-%, preferably in the range of from 50 to 100 weight-%, more preferably in the range of from 60 to 100 weight-%, more preferably in the range of from 70 to 100 weight-%, based on the total weight of the mixture being 100%.

The present disclosure also relates to a polymeric material, which is depleted in colorant, obtained or obtainable from the process according to the first aspect.

The present disclosure also relates to the use of the polymeric material, which is depleted in colorant of for textile applications, fiber applications, packaging applications or plastic applications, preferably for the production of food packaging, beverage packaging, clothing and foot wear.

2nd aspect - process for preparing a textile

A second aspect of the invention relates to a process for preparing a textile or a packaging comprising

(i) providing a colored polymeric material and providing a solvent comprising gamma-valerolactone;
(ii) contacting the colored polymeric material with a solvent comprising gamma-valerolactone at a temperature in the range of from 40 to 160°C, thereby obtaining a solvent, which is enriched in colorant compared to the solvent provided in (i), and a polymeric material, which is depleted in colorant compared to the colored polymeric material provided in (i);

wherein the polymeric material is a polyethylene terephthalate (PET) based polymeric material, which comprises in the range of from 30 to 100 weight-% PET, the total weight of the polymeric material being 100 weight-%;;
preparing a textile or a packaging from the polymeric material, which is depleted in colorant provided in (ii).

Preferably, the process comprises

(iii) separating the solvent being enriched in colorant as obtained in (ii) from the polymeric material, which is depleted in colorant as obtained in (ii), thereby obtaining a separated solvent being enriched in colorant and a separated polymeric material, which is depleted in colorant compared to the polymeric material provided in (i);
(iv-a) optionally separating the colorant and the solvent being enriched in colorant obtained in (iii), thereby obtaining a solvent being depleted of colorant compared to the solvent being enriched in colorant as obtained in (ii);
(iv-b) optionally washing the separated polymeric material obtained in (iii) with a washing solvent comprising gamma-valerolactone and optionally one or more solvent(s) selected from the group consisting of water and organic solvents having a $\log K_{OW}$ in the range of from - 1.6 to +1.6, thereby obtaining a first washed polymeric material, which is depleted in colorant compared to the polymeric material provided in (i);
(iv-c) optionally washing the first washed polymeric material, which is depleted in colorant compared to the polymeric material provided in (i), obtained in (iv-b) thereby obtaining a second washed polymeric material, which is depleted in colorant compared to the polymeric material provided in (i);

(iv-d) optionally drying the first washed polymeric material, which is depleted in colorant compared to the polymeric material provided in (i) or the second washed polymeric material, which is depleted in colorant compared to the polymeric material provided in (i);

wherein optionally (iv-b) and/or (iv-c) are repeated at least once before (iv-d) is conducted;

preparing a textile or a packaging from the polymeric material, which is depleted in colorant provided in (ii), from the separated polymeric material, which is depleted in colorant, provided in (iii), from the first washed polymeric material, which is depleted in colorant, provided in (iv-b), from the second washed polymeric material, which is depleted in colorant, provided in (iv-c), and/or from the dried second washed polymeric material, which is depleted in colorant, provided in (iv-d).

All details disclosed above in the section related to the first aspect also apply for the process of the second aspect.

The present invention is further illustrated by the following reference examples, comparative examples, and examples.

**Examples**

Methods

**Hazen color index:**

The Hazen color index (APHA color number) was determined according to DIN EN ISO 6271:2016-05 (Pt/Co, APHA, ASTM D1209, D5386).

**CIE-LAB:**

L*a*b* values were determined in that the samples were measured using an integrating sphere and UV/VIS-remission spectra (with a wavelength area of 400-700 nm) were obtained. The data of these spectra were analyzed by the software OptLab-SPX using 2° standard observer and the standard light type C. The OptLab-SPX software calculates the L*a*b*-values based on DIN 5033 and DIN EN ISO 11664-1.6 from the years 2007-2014.

**GC area%:**

The sample was analyzed by gas chromatography (GC), wherein the method detected individual components from a sample dependent on their individual retention times. The concentration of the individual component in the sample were given in its percental peak area as GC-area%.

**GPC (Gel-Permeation Chromatography):**

Sample preparation:

7.5 mg sample was dissolved in 5 ml eluent (HFIP + 0.05 weight-% Trifluoro potassium acetate) over night. All sample solutions were filtered by a Millipore Millex FG (0.2 $\mu$m) filtered prior to injection. Sealed sample vials were placed into the auto sampler.

Experimental conditions:

An Agilent 1100 HPLC system, consisting of an isocratic pump, vacuum degasser, auto sampler and a column oven (40°C) was used. Furthermore, contains the Agilent system as detectors a Differential Refractive Index (DRI) and a variable Ultra Violet (UVW) Detector. Data acquisition and data processing of conventionally SEC data were done by WinGPC Unichrom, of PSS (Polymer Standard Services). A combination of a PL-HFIP guard (7.5 x 50 mm) column and 2 PL-HFIP Gel columns (7.5 x 300 mm, 9$\mu$) of Agilent were put in series. As an eluent, Hexafluorisopropanol + 0.05 weight-% Trifluoro potassium acetate was used as a flow rate of 1 ml/min. Of each sample solution 50$\mu$l was injected. The calibration was obtained by narrow molar mass distributed PMMA standards (Polymer Standard Services) having a molar mass range of M= 800 till M = 2.200.000 g/mol. Molar masses outside this range were extrapolated.

**Quantitative $^1$H NMR Spectroscopy:**

The content of PET in the samples was determined by quantitative $^1$H-NMR spectroscopy. All NMR spectra were recorded at T = 298.2 K on a Bruker Avance III 400 spectrometer operating at 400.33 MHz for [1]H. The spectrometer was equipped with a 5 mm *z*-gradient broadband observe smartprobe. Chemical shifts were referenced to tetramethylsilane (TMS, $\delta$(TMS) = 0 ppm). $^1$H 1D spectra were recorded under quantitative conditions using the zg pulse program with a recording of 128k data points, the relaxation delay D1 was chosen as 40 seconds, and 8 transients were summed up per spectrum. For processing in Bruker TopSpin 4.0.9 software, 64k data points were used, an exponential window function with a line broadening of 0.3 Hz was applied. Automatic baseline correction with a polynomial of 5 was performed, phase correction was performed manually by the user.

Samples were prepared by exact weighing (Mettler-Toledo XP205DR analytical balance) of the internal standard 1,1,2,2-tetrachloroethane (TCE) and the analyte in as suitable vial, followed by dissolution of the pure analyte in a 2 ml mixture of deuterated chloroform and trifluoroacetic acid (2 : 1) with traces of TMS as internal reference. The samples were transferred into 5 mm NMR tubes for measurement. Deuterated solvents and TMS were purchased from Euriso-Top GmbH; TCE from Sigma-Aldrich / Fluka, and used as received.

The content of test item was calculated by using the following equation:

$$w = \frac{E_{St} \cdot I_K \cdot M_K \cdot A_{St} \cdot R_{St}}{E_P \cdot I_{St} \cdot M_{St} \cdot A_K}$$

wherein:

$w$ = mass fraction of the analyte in the sample [g/100 g],
$I_k$ = peak intensity of the analyte,
$I_{St}$ = peak intensity of the standard,
$E_P$ = sample mass [g],
$E_{St}$ = mass of the standard [g],
$A_K$ = protons/molecule of analyte,
$A_{St}$ = protons/molecule of the standard,
$M_K$ = molecular weight of the analyte [g/mol],
$M_{St}$ = molecular weight of the standard [g/mol], and
$R_{St}$ = purity of the standard [g/100 g].

For quantification triplicate determinations were carried out. Evaluation was performed by using 2 protons/molecule of the internal standard TC (at about 5.9 ppm) and 4 selected protons/molecule of the analyte PET (at about 8.1 ppm).

**Emitted fluorescence radiation:**

The samples were placed under a UV Lamp and were irradiated with a wavelength of 254 nm. The fluorescence of the samples was detected visually.

Chemicals

| (Chemical) name | Abbreviation |
| --- | --- |
| Polymeric materials | |
| polyethylene terephthalate | PET |
| block copolymer comprising polyurethane and polyethylene glycol (≥85 weight-% polyurethane) | elastane |
| Cotton | --- |
| solvents | |
| gamma-valerolactone (5-methyl oxolan-2-one) | GVL |

(continued)

| solvents | |
|---|---|
| water | -- |
| acetone | -- |
| N-methyl-2-pyrollidone | NMP |
| 1,3-dimethyl-2-imidazolidinone | DMI |
| cyclohexanone | --- |
| ethyl benzoate | --- |

**Reference Example 1: General procedure for discoloration**

0.5 g of colored polymeric material (in any processing form, e.g. textile, flakes etc.) was cut/shredded into pieces and placed in a reaction vessel made of glass (e.g. flask, tube, reaction vessel). GVL was added (in mass based ratio polymeric material : GVL 1:1 to 1:100, preferred 1:1-1:20) and the mixture was heated by use of a suitable heating system (e.g. oil bath, heating blocks, mini-plant vessels) to a temperature in the range of from 60 to 160 °C. After 0.5-8 h the mixture was filtered, whereby GVL enriched in colorant and discolored polymeric material pieces were obtained and the discolored polymeric material pieces were washed with a small amount of GVL. For an easy removal of GVL and a faster drying process of the discolored polymeric material pieces, small amounts of acetone can be used in a second washing step. The thus obtained polymeric material pieces were dried (for example in a vacuum compartment dryer).

The samples were analysed before treatment (colored polymeric material) and after the final drying step (polymeric material depleted of colorant) in that number average molecular weight Mn, mass average molecular weight Mw, dispersity Mw/Mn, and L*a*b* values, as well as quantitative $^1$H-NMR, were determined. In case of the colorants being optical brighteners, determination of the intensity of emitted fluorescence radiation was made visually by using an UV lamp before treatment (colored polymeric material) and after the final drying step (polymeric material depleted of colorant).

For recycling of the used solvent GVL, the filtrate was distilled (50-200 °C, 2 hPa to ambient pressure, preferred 70-110 °C, 5-30 hPa) to obtain GVL having a purity according to GC of > 99 %. For GLV, the Hazen color index was determined before treatment and after distillation.

**Comparative Examples (CE) 1 to 4: discoloration using known discoloration solvents**

The comparative examples 1 to 4 were carried out as described in Reference Example 1 for a mixture of textile samples of yellow, green, blue and black color with the difference that instead of GVL another solvent selected from NMP (Comparative Example 1), DMI (Comparative Example 2), cyclohexanone (Comparative Example 3) or ethyl benzoate (Comparative Example 4) was used. The success of discoloration was determined based on the comparison of the L* a* b* values of the polymeric material before treatment with any solvent (yellow samples: L* = 78.2. a* = -10.8. b* = 42.3; green samples: L* = 54.8. a* = -32.3. b* = 21.2; blue samples: L* = 36.9. a* = 1.0. b* = -6.0; black samples: L* = 35.8. a* = 0.1. b* = -0.8.) and after treatment, wherein all textile samples within the mixture were of about the same color, wherein the L* a* b* values for exemplary textile samples from the mixture are indicated in parentheses below:

CE1: With NMP the discoloration worked (L* = 86.8. a* = -0.3. b* = 2.9)
CE2: With DMI the discoloration worked fairly, with a slight blue touch of the textile (L* = 84.2. a* = -2.8. b* = -1.8)
CE3: With cyclohexanone the discoloration worked (L* = 87.0. a* = -1.0. b* = 4.9),
CE4: With ethyl benzoate the discoloration did not work since the material had uniformly a blue-grey color (L* = 73.0. a* = -2.4. b* = 3.8)

**Comparative Example (CE) 5: discoloration using DMI as discoloration solvent on a black textile**

Comparative example 5 was carried out as described in Reference Example 1 for a black textile. As solvent instead of GVL DMI was used. The success of discoloration was determined based on the comparison of the L* a* b* values of the polymeric material before (L* = 36.9, a* = -0.8 and b* = -2.3) and after treatment.

CE5: With DMI the discoloration worked fairly, with however a yellow touch of the textile (L* = 79.8, a* = -0.2, b* = 3.6)

**Examples 1 to 21: Discoloration of polymeric materials using GVL**

All polymeric materials were treated as described in Reference Example 1, wherein type of polymeric material and experimental conditions, as well as results are indicated in Table 1.

For Examples 1-13 and 16-21, the colorants were dyes (including organic or inorganic dyes, pigments and dispersions), whereas in example 15, the colorant was an optical brightener - the removal thereof was analyzed visually using an UV lamp.

For Example 16, a first portion of 6 g colored polymeric material was treated as described in Reference Example 1. The GVL enriched in colorant obtained from the filtration was then used without purification for treatment of a second portion of 3.6 g colored polymeric material, following the procedure as described in Reference Example 1.

**Table 1**

| Overview material, conditions and results of Examples 1 to 17 | | | | | | | |
|---|---|---|---|---|---|---|---|
| Example No. | Polymeric material | Type | Conditions | Details, Comments | Degree of Discoloration (visual inspection) | L*a*b* value | |
| | | | | | | before treatment | after treatment |
| 1 | PET | Single colored textile* | 10 ml GVL (in total 60 ml), 150 °C, 6 h | GVL decanted after every hour and 10 ml fresh GVL added | Complete discoloration for all samples; all samples had a uniform white appearance | 1. yellow sample:<br><br>L* = 78.2.<br>a* = -10.8.<br>b* = 42.3.<br>2. Green sample:<br>L* = 54.8.<br>a* = -32.3.<br>b* = 21.2.<br>3. Blue sample:<br>L* = 36.9.<br>a* = 1.0.<br>b* = -6.0.<br>4. black sample:<br>L* = 35.8.<br>a* = 0.1.<br>b* = -0.8. | 1. yellow sample:<br><br>L* = 85.7.<br>a* = -0.4.<br>b* = 0.1.<br>2. green sample:<br>L* = 89.1.<br>a* = -0.9.<br>b* = 2.5.<br>3. blue sample:<br>L* = 89.2.<br>a* = -0.7.<br>b* = 2.6.<br>4. black sample:<br>L* = 87.5.<br>a* = -0.5.<br>b* = 6.4. |
| 2 | PET | multicolored rPET flakes | 10 ml GVL (in total 60 ml), 150 °C, 6 h | GVL decanted after every hour and 10 ml fresh GVL added | Complete discoloration for all samples; all | | |
| | | from different suppliers | | | flakes had a uniform white appearance | | |

(continued)

| Overview material, conditions and results of Examples 1 to 17 | | | | | | | |
|---|---|---|---|---|---|---|---|
| Example No. | Polymeric material | Type | Conditions | Details, Comments | Degree of Discoloration (visual inspection) | L*a*b* value | |
| | | | | | | before treatment | after treatment |
| 3 | PET | Textile color mix** | 10 ml GVL, 150 °C, 6 h | No solvent change of GVL | Complete discoloration; all samples had a uniform white appearance | | |
| 4 | PET | Randomly collected multicolored PET bottles cut in pieces | 3-10 ml GVL, 150 °C, 6 h | The experiment was carried out for 3 samples with 3, 5 or 10 ml GLV per sample, each sample was then treated at 150°C for 6 h without solvent change | Complete discoloration of all samples; all samples had a uniform white appearance | | |
| 5 | PET | Textile color mix** | 5ml GVL, 130 °C, 3-6 h | The experiment was carried out for 4 samples with a stop after 3, 4, 5 and 6 hours respectively without solvent change, wherein the discoloration was checked visually each hour. | Complete discoloration after 5 h; all samples had a uniform white appearance | mixture of textile samples of yellow, green, blue and black color (mixture of single colored textiles from Example 1) | After 6 h: L* = 88.2. a* = -0.8. b* = 2.2. |
| 6 | PET | Textile color mix** | 5 ml GVL, 120 °C, 3-6 h | The experiment was carried out for 4 samples with a stop after 3, 4, 5 and 6 hours respectively without solvent change, wherein the discoloration was checked visually each hour. | Complete discoloration after 5 h; all samples had a uniform white appearance | mixture of textile samples of yellow, green, blue and black color (mixture of single colored textiles from Example 1) | After 6 h: L* = 88.8. a* = -0.6. b* = 3.7. |

(continued)

| Overview material, conditions and results of Examples 1 to 17 | | | | | | | |
|---|---|---|---|---|---|---|---|
| Example No. | Polymeric material | Type | Conditions | Details, Comments | Degree of Discoloration (visual inspection) | L*a*b* value | |
| | | | | | | before treatment | after treatment |
| 7 | PET | Textile color mix** | 5 ml GVL, 110 °C, 3-6 h | The experiment was carried out for overall 6 h, wherein the discoloration was checked visually each hour. | Partial Discoloration resulting in an off-white (slightly grey) textile after 5 h | mixture of textile samples of yellow, green, blue and black color (mixture of single colored textiles from Example 1) | After 6 h: L* = 83.0. a* = -1.1. b* = 3.3. |
| 8 | PET | Shredded multicolored rPET flakes | 5 ml GVL/$H_2O$ (1:1 and 3:1), 90 °C, 6 h | GVL/Water mixture as solvent | Discoloration but not complete | | |
| 9 | PET | Shredded multicolored rPET flakes | 5 ml GVL, 120 °C, 5-6 h | The experiment was carried out twice, one time for 5 h, the other time for 6 h, wherein the discoloration was checked visually in both cases at the end. | Complete discoloration for both 5 h and 6 h; all flakes had a uniform white appearance | | |
| 10 | PET | Textile color mix** | 5 ml GVL, 120 °C, 6 h | | Complete discoloration; all samples had a uniform white appearance | mixture of textile samples of yellow, green, blue and black color (mixture of single colored textiles from Example 1) | After 6 h: L* = 87.6. a* = -1.0. b* = 3.0. |

(continued)

| Overview material, conditions and results of Examples 1 to 17 | | | | | | | |
|---|---|---|---|---|---|---|---|
| Example No. | Polymeric material | Type | Conditions | Details, Comments | Degree of Discoloration (visual inspection) | L*a*b* value | |
| | | | | | | before treatment | after treatment |
| 11 | Cotton/PET | Multicolored textile mixture (cotton: PET 60 :40) | 10 ml GVL, 150 °C, 6 h | | Partially discolored*** | | |
| 12 | cotton | 100% colored cotton textile | 10 ml GVL, 150 °C, 6 h | | No discoloration | | |
| 13 | PET/elastane | Beach fashion (Mixed colour: containing, inter alia, purple, green, yellow, red, black, blue, orange, pink and turquoise) | 5 ml GVL, 120 °C, 6 h | The disco-loration was checked vi-sually | Complete discoloration; uniform white appearance | | |
| 14 | PA/PET | Purple colored textile mixture (PA: PET 50 :50) | 10 ml GVL, 150 °C, 6 h | The disco-loration was checked vi-sually | Complete discoloration; uniform white appearance | | |
| 15 | PET | White Textile | 5 ml GVL, 120 °C, 6 h | Removal of optical brighteners | Complete re-moval of opti-cal bright-eners. Textile fluorescent before treat-ment - after treatment no fluorescence | | |

(continued)

| Example No. | Polymeric material | Type | Conditions | Details, Comments | Degree of Discoloration (visual inspection) | L*a*b* value | |
|---|---|---|---|---|---|---|---|
| | | | | | | before treatment | after treatment |
| 16 | PET | Textile color mix** | 1. 6 g PET textile, 60 ml GVL, 130 °C, 6 h<br><br>2. 3.6 g PET textile, 36 ml GVL obtained from 1., 130 °C, 6 h | Reuse of solvent | Complete discoloration of two portions of PET for two consecutive runs with the same solvent, which had not been purified inbetween the runs; all samples had a uniform white appearance | mixture of textile samples of yellow, green, blue and black color (mixture of single colored textiles from Example 1) | 1st Use:<br><br>L* = 86.1.<br>a* = -0.3.<br>b* = 3.4.<br><br>2nd Use:<br>L* = 89.3.<br>a* = -0.7.<br>b* = 1.9. |
| 17 | PET | Textile color mix**(including red) | 5 ml GVL, 120 °C, 6 h | Application to textile of different origin | Complete discoloration; all samples had a uniform white appearance | L* = 69.1.<br>a* = 6.9.<br>b* = 1.5 | L* = 88.4.<br>a* = -0.8.<br>b* = 0.9 |
| 18 | PET | Textile color mix**(including red) | 5 ml GVL, 120 °C, 6 h | Application to textile of different origin | Complete discoloration; all samples had a uniform white appearance | L* = 58.7.<br>a* = 0.5.<br>b* = 9.9 | L* = 85.4.<br>a* = 0.5.<br>b* = 0.1 |
| 19 | PET | Textile color mix**(including red) | 5 ml GVL, 120 °C, 6 h | Application to textile of different origin | Complete discoloration; all samples had a uniform white appearance | L* = 36.7.<br>a* = 1.7.<br>b* = 0.1 | L* = 75.8.<br>a* = 3.3.<br>b* = 1.2 |
| 20 | PET | Black textile**** | 5 ml GVL, 150 °C, 6 h | | Almost complete discoloration; all samples had a uniform white appearance | L* = 36.9.<br>a* = -0.8.<br>b* = -2.3. | L* = 88.2.<br>a* = -0.7.<br>b* = 2.2. |

(continued)

| Overview material, conditions and results of Examples 1 to 17 | | | | | | | |
|---|---|---|---|---|---|---|---|
| Example No. | Polymeric material | Type | Conditions | Details, Comments | Degree of Discoloration (visual inspection) | L*a*b* value | |
| | | | | | | before treatment | after treatment |
| 21 | PET | Black textile***** | 10 g PET textile, 50 mL GVL, 150 °C, 6 h | The discoloration was checked visually | Complete discoloration; uniform white appearance | | |
| * Single colored textile: textile samples of yellow, green, blue and black color, each color in a separate vessel<br>** Textile color mix: textile samples of yellow, green, blue, black color and optionally red, mixed in one vessel<br>*** Parts of the textile mixture remained colored which other parts were discolored. Presumably -in view of example 13-, only PET contained in the multicolored textile mixture was discolored.<br>**** "Black" based on uniform black color<br>***** "Black" based on mixture of several colors, wherein the mix appears black | | | | | | | |

For the green textile sample from Example 1, Mn (GPC), Mw (GPC), dispersity, and the amount of PET in the sample (by quantitative $^1$H-NMR) were determined before and after treatment. The results are summarized in Table 2.

**Table 2**

| Green sample of Example 1 | Number average Mn [g/mol] | Mass average Mw [g/mol] | Dispersity Mw/Mn | Quantitative $^1$H-NMR [g/100g] |
|---|---|---|---|---|
| Before treatment | 16,900 | 45,100 | 2.7 | 99.6 $\pm$ 1.0 |
| After treatment | 19,700 | 46,000 | 2.3 | 99.5 $\pm$ 1.0 |

It was found that, especially for polymeric materials comprising polyethylene terephthalate (PET), gamma-valerolactone enables a discoloration of the polymeric material without dissolution. The discoloration worked quite well for different colorants, i.e. textile materials having colors such as yellow, green, blue, red, black and a diversity of mixtures of these colors, could all be removed resulting in a white or almost white polymeric material, without any substantial loss with respect to the polymeric material itself. Even optical brighteners could be successfully removed without damaging the polymeric material itself, which could be shown with respect to the removal of optical brighteners based on a comparison of intensity of emitted fluorescence radiation. Remarkably, the polymeric material is only depleted in colorant, but neither dissolved nor otherwise modified, i.e. the polymeric material depleted in colorant compared to the initially colored polymeric material had about the same number average molecular weight Mn and the same mass average molecular weight Mw as the colored polymeric material initially provided and has the same amount of polymeric material as the colored polymeric material provided as shown by, for example, quantitative $^1$H-NMR.

The results of the comparative Examples C2 and C5, both with DMIas discoloration solvent, were put into comparison with the respective discoloration results for the same textiles, where GVL was used as discoloration solvent, namely Example 6 and Example 20. The results are shown below in Table 3:

**Table 3**

| Comparison for different textiles with DMI or GVL as discoloration solvent | | | |
|---|---|---|---|
| Starting material | DMI (CE2) | GVL (Example 6) | Comment |
| Textile mixture of black, blue, green and yellow[a] | L* = 84.2.<br>a* = -2.8.<br>b* = -1.8. | L* = 88.8.<br>a* = -0.6.<br>b* = 3.7. | Application of GVL:<br>1. gave whiter material, whereas with DMI, the material after treatment had a higher L* value.<br>2. The material nearly had no red or green colour, whereas with |
| | | | DMI a green colour was detected (a* is nearer to 0 than for DMI). |

(continued)

| Comparison for different textiles with DMI or GVL as discoloration solvent | | | |
|---|---|---|---|
| Starting material | DMI (CE2) | GVL (Example 6) | Comment |
| | | | 3. The material had a yellowish touch (positive b* value), whereas with DMI a clear blue touch (negative b* value) was detected. |
| | DMI (CE5) | GVL (Example 20) | |
| Black textile<br>L* = 36.9.<br>a* = -0.8.<br>b* = -2.3. | L* = 79.8.<br>a* = -0.2.<br>b* = 3.6. | L* = 88.2.<br>a* = -0.7.<br>b* = 2.2. | Application of GVL:<br>1. Gave a whiter product, whereas with DMI a significant higher L* value detected.<br>2. a* (amount of how red or green) of the materials had nearly the same value.<br>3. The material had a smaller b* value compared to using DMI; the material from DMI treatment was more yellow, than with GVL. |

It could be shown that, especially for polymeric materials comprising polyethylene terephthalate (PET), gamma-valerolactone enabled a better discoloration of the polymeric material than DMI. Thus, a discoloration solvent was found, which is not only not a carcinogenic, mutagenic or reprotoxic substance (CMR substance) and also a non-toxic substance in general, but which is moreover superior in discoloration than other conventional discoloration solvents such as DMI.

**Cited Literature**

- WO 2016/12755 A1
- Wenjun Chen, Yuechao Yang, Xue Lan, Baolong Zhang, Xiaogang Zhang and Tiancheng Mu in Green Chem., 2021, 23, 4065
- Theodore W. Walker, Nathan Frelka, Zhizhang Shen, Alex K. Chew, Jesse Banick, Steven Grey, Min Soo Kim, James A. Dumesic, Reid C. Van Lehn, George W. Huber in Sci. Adv. 2020; 6 : eaba7599 20 November 2020
- GB 2528494
- "Dyes and Pigments" Metin Agikyildiz, Kübra Günes, Ahmet Gürses Springer, 2016 (ISBN 10: 3319338900)
- Industrial Organic Pigments - Klaus Hunger, Thomas Heber, Martin U. Schmidt, Friedrich Reisinger, Stefan Wanne Wiley-VCH, 4th edition, 2018 (ISBN 978-3-527-32608-2)
- Chemistry and Technology of Natural and Synthetic Dyes and Pigments - Ashis Kumar Samanta, Nasser Awwad, IntechOpen, 2020 (ISBN 9781789859980, 9781789859973, 9781839687587)
- Encyclopedia of Color, Dyes, Pigments - Volume 1, Gerhard Pfaff, de Gruyter, 2021 (ISBN: 311058588X)
- Heinrich Zollinger: Color Chemistry: Syntheses, Properties, and Applications of Organic Dyes and Pigments. 3rd edition. WILEY-VCH Verlag, Weinheim 2003 (ISBN: 3-906390-23-3)
- Klaus Hunger (Ed.): Industrial Dyes: Chemistry, Properties, Applications. WILEY-VCH Verlag, Weinheim 2003 (ISBN: 3-662-01950-7)
- Hermann Rath: Lehrbuch der Textilchemie. einschl. der textilchemischen Technologie. 2nd edition. Springer-Verlag, Berlin, Heidelberg 1963 (ISBN: 978-3-662-00065-6)
- Wilfried Kratzert, Rasmus Peichert: Farbstoffe. Quelle & Meyer, Heidelberg 1981 (ISBN: 3-494-01021-8); Ullmann's Encyclopedia of industrial chemistry, Wiley-VCH, 2000, sections "dyes and pigments" and "dyes, general survey" (ISBN: 9783527303854).

**Claims**

1.  A process for discoloration of a colored polymeric material comprising:

(i) providing a colored polymeric material and providing a solvent comprising gamma-valerolactone;
(ii) contacting the colored polymeric material with a solvent comprising gamma-valerolactone at a temperature in the range of from 40 to 160°C, thereby obtaining a solvent, which is enriched in colorant compared to the solvent provided in (i), and a polymeric material, which is depleted in colorant compared to the colored polymeric material provided in (i);

wherein the polymeric material is a polyethylene terephthalate (PET) based polymeric material, which comprises in the range of from 30 to 100 weight-% PET, the total weight of the polymeric material being 100 weight-%.

2. The process for discoloration of claim 1, wherein the contacting in (ii) is done at a pressure in the range of from 800 to 200,000 hPa.

3. The process for discoloration of claim 1, wherein the contacting in (ii) is done at a temperature in the range of from 60 to 160°C.

4. The process for discoloration of any one of claims 1 to 3, wherein the contacting in (ii) is done at a temperature in the range of from 60 to 160°C and at a pressure in the range of from 800 to 1200 hPa;
   or
   wherein the contacting in (ii) is done at a temperature in the range of from 60 to 160°C and at a pressure in the range of from 1013 to 200,000 hPa.

5. The process for discoloration of any one of claims 1 to 4, wherein the solvent comprises gamma-valerolactone and optionally one or more solvent(s) selected from the group consisting of water and organic solvents having a log $K_{OW}$ in the range of from -1.6 to +1.6, wherein at least 1 weight-% of the solvent consists of gamma-valerolactone, based on the total weight of the solvent being 100 weight-%.

6. The process for discoloration of any one of claims 1 to 5, wherein the solvent comprises water and gamma-valerolactone, preferably in a weight-based ratio water: gamma-valerolactone in the range of from 1:10 to 10:1; and/or, preferably and, wherein the contacting in (ii) is done at a temperature in the range of from 60 to 99°C.

7. The process for discoloration of any one of claims 1 to 5, wherein at least 80 weight-% of the solvent consist of gamma-valerolactone, based on the total weight of the solvent.

8. The process for discoloration of any one of claims 1 to 7, wherein the contacting in (ii) is done with a in mass based ratio colored polymeric material : solvent in the range of 1:1 to 1:100.

9. The process for discoloration of any one of claims 1 to 8 comprising:
   (iii) separating the solvent being enriched in colorant as obtained in (ii) from the polymeric material, which is depleted in colorant as obtained in (ii), thereby obtaining a separated solvent being enriched in colorant and a separated polymeric material, which is depleted in colorant compared to the polymeric material provided in (i).

10. The process for discoloration of any one of claims 1 to 9 comprising:
    (iv-a) separating the colorant and the solvent being enriched in colorant obtained in (iii), thereby obtaining a solvent being depleted of colorant compared to the solvent being enriched in colorant as obtained in (ii).

11. The process for discoloration of any one of claims 1 to 10 comprising recycling the solvent being depleted of colorant as obtained in (iv-a) and/or the separated solvent being enriched in colorant obtained in (iii) at least partially to (i).

12. The process for discoloration of any one of claims 1 to 11 comprising

    (iv-b) washing the separated polymeric material obtained in (iii) with a washing solvent comprising gamma-valerolactone and optionally one or more solvent(s) selected from the group consisting of water and organic solvents having a log$K_{OW}$ in the range of from -1.6 to +1.6, thereby obtaining a first washed polymeric material, which is depleted in colorant compared to the polymeric material provided in (i);
    (iv-c) optionally washing the first washed polymeric material, which is depleted in colorant compared to the polymeric material provided in (i), obtained in (iv-b) thereby obtaining a second washed polymeric material, which is depleted in colorant compared to the polymeric material provided in (i);
    (iv-d) optionally drying the first washed polymeric material, which is depleted in colorant compared to the polymeric material provided in (i) or the second washed polymeric material, which is depleted in colorant compared to the polymeric material provided in (i);
    wherein optionally (iv-b) and/or (iv-c) are repeated at least once before (iv-d) is conducted.

13. The process for discoloration of any one of claims 1 to 12, wherein the polyethylene terephthalate (PET) based polymeric material, which comprises in the range of from 30 to 100 weight-% PET comprises one or more further polymer(s) selected from the group consisting of polyacryl nitrile (PAN), polyamide (PA), polybutylene terephthalate (PBT), polytetramethylene ether glycol (Poly-THF), polyurethane (PU), polyethylene glycol (PEG), polypropylene glycol (PPG), polyglycolic acid (PGA), polystyrene (PS), styrene-butadiene rubber (SBR), polyvinylchlorid (PVC), polyethersulfone (PES), polyether ether ketone (PEEK), polyethylenenaphthalate (PEN), polycarbonate (PC), polylactic acid (PLA), acrylonitrile butadiene styrene (ABS), polyacrylic acids and esters (PAA) / poly(methyl methacrylate) (PMMA), polyoxymethylen (POM), polycaprolactone (PCL), polyethylene adipate (PEA), polytrimethylene terephthalate (PTT), polyhydroxyalkanoate (PHA), and copolymers of two or more of these polymeric materials, wherein the total weight of the polymeric material is 100 weight-%.

14. A process for preparing a textile or a packaging comprising

(i) providing a colored polymeric material and providing a solvent comprising gamma-valerolactone;
(ii) contacting the colored polymeric material with a solvent comprising gamma-valerolactone at a temperature in the range of from 40 to 160°C, thereby obtaining a solvent, which is enriched in colorant compared to the solvent provided in (i), and a polymeric material, which is depleted in colorant compared to the colored polymeric material provided in (i);
wherein the polymeric material is a polyethylene terephthalate (PET) based polymeric material, which comprises in the range of from 30 to 100 weight-% PET, the total weight of the polymeric material being 100 weight-%;
preparing a textile or a packaging from the polymeric material, which is depleted in colorant, provided in (ii).

15. The process of claim 14 comprising

(iii) separating the solvent being enriched in colorant as obtained in (ii) from the polymeric material, which is depleted in colorant as obtained in (ii), thereby obtaining a separated solvent being enriched in colorant and a separated polymeric material, which is depleted in colorant compared to the polymeric material provided in (i);
(iv-a) optionally separating the colorant and the solvent being enriched in colorant obtained in (iii), thereby obtaining a solvent being depleted of colorant compared to the solvent being enriched in colorant as obtained in (ii);
(iv-b) optionally washing the separated polymeric material obtained in (iii) with a washing solvent comprising gamma-valerolactone and optionally one or more solvent(s) selected from the group consisting of water and organic solvents having a $logK_{OW}$ in the range of from -1.6 to +1.6, thereby obtaining a first washed polymeric material, which is depleted in colorant compared to the polymeric material provided in (i);
(iv-c) optionally washing the first washed polymeric material, which is depleted in colorant compared to the polymeric material provided in (i), obtained in (iv-b) thereby obtaining a second washed polymeric material, which is depleted in colorant compared to the polymeric material provided in (i);
(iv-d) optionally drying the first washed polymeric material, which is depleted in colorant compared to the polymeric material provided in (i) or the second washed polymeric material, which is depleted in colorant compared to the polymeric material provided in (i);
wherein optionally (iv-b) and/or (iv-c) are repeated at least once before (iv-d) is conducted;
preparing a textile or a packaging from the polymeric material, which is depleted in colorant provided in (ii), from the separated polymeric material, which is depleted in colorant provided in (iii), from the first washed polymeric material, which is depleted in colorant provided in (iv-b), from the second washed polymeric material, which is depleted in colorant provided in (iv-c), and/or from the dried second washed polymeric material, which is depleted in colorant provided in (iv-d).

**Patentansprüche**

1. Verfahren zur Verfärbung eines farbigen Polymermaterials, umfassend:

(i) die Bereitstellung eines farbigen Polymermaterials und die Bereitstellung eines gamma-Valerolacton umfassenden Lösungsmittels;
(ii) das Inkontaktbringen des farbigen Polymermaterials mit einem gamma-Valerolacton umfassenden Lösungsmittel bei einer Temperatur im Bereich von 40 bis 160 °C unter Erhalt eines im Vergleich zu dem in (i) bereitgestellten Lösungsmittel an Farbmittel angereicherten Lösungsmittels und eines im Vergleich zu dem in (i) bereitgestellten farbigen Polymermaterial an Farbmittel abgereicherten Polymermaterials;

wobei das Polymermaterial ein Polymermaterial auf Polyethylenterephthalat(PET)-Basis ist, das im Bereich von 30 bis 100 Gew.-% PET umfasst, wobei das Gesamtgewicht des Polymermaterials 100 Gew.-% beträgt.

2. Verfahren zur Verfärbung nach Anspruch 1, wobei das Inkontaktbringen in (ii) bei einem Druck im Bereich von 800 bis 200.000 hPa erfolgt.

3. Verfahren zur Verfärbung nach Anspruch 1, wobei das Inkontaktbringen in (ii) bei einer Temperatur im Bereich von 60 bis 160 °C erfolgt.

4. Verfahren zur Verfärbung nach einem der Ansprüche 1 bis 3, wobei das Inkontaktbringen in (ii) bei einer Temperatur im Bereich von 60 bis 160 °C und bei einem Druck im Bereich von 800 bis 1200 hPa erfolgt; oder wobei das Inkontaktbringen in (ii) bei einer Temperatur im Bereich von 60 bis 160 °C und bei einem Druck im Bereich von 1013 bis 200.000 hPa erfolgt.

5. Verfahren zur Verfärbung nach einem der Ansprüche 1 bis 4, wobei das Lösungsmittel gamma-Valerolacton und gegebenenfalls ein oder mehrere aus der aus Wasser und organischen Lösungsmitteln mit einem log $K_{OW}$ im Bereich von -1,6 bis +1,6 bestehenden Gruppe ausgewählte Lösungsmittel umfasst, wobei mindestens 1 Gew.-% des Lösungsmittels aus gamma-Valerolacton besteht, bezogen auf das Gesamtgewicht des Lösungsmittels von 100 Gew.-%.

6. Verfahren zur Verfärbung nach einem der Ansprüche 1 bis 5, wobei das Lösungsmittel Wasser und gamma-Valerolacton umfasst, vorzugsweise in einem Gewichtsverhältnis Wasser:gamma-Valerolacton im Bereich von 1:10 bis 10:1 und/oder, vorzugsweise und wobei das Inkontaktbringen in (ii) bei einer Temperatur im Bereich von 60 bis 99 °C erfolgt.

7. Verfahren zur Verfärbung nach einem der Ansprüche 1 bis 5, wobei mindestens 80 Gew.-% des Lösungsmittels aus gamma-Valerolacton bestehen, bezogen auf das Gesamtgewicht des Lösungsmittels.

8. Verfahren zur Verfärbung nach einem der Ansprüche 1 bis 7, wobei das Inkontaktbringen in (ii) mit einem Massenverhältnis von farbigem Polymermaterial : Lösungsmittel im Bereich von 1:1 bis 1:100 erfolgt.

9. Verfahren zur Verfärbung nach einem der Ansprüche 1 bis 8, umfassend: (iii) das Abtrennen des mit Farbmittel gemäß (ii) angereicherten Lösungsmittels von dem an Farbmittel gemäß (ii) abgereicherten Polymermaterial, unter Erhalt eines abgetrennten, mit Farbmittel angereicherten Lösungsmittels und eines abgetrennten, im Vergleich zu dem in (i) bereitgestellten Polymermaterial an Farbmittel abgereicherten Polymermaterials.

10. Verfahren zur Verfärbung nach einem der Ansprüche 1 bis 9, umfassend: (iv-a) das Abtrennen des Farbmittels und des in (iii) erhaltenen, mit dem Farbmittel angereicherten Lösungsmittels unter Erhalt eines im Vergleich zu dem in (ii) erhaltenen, mit dem Farbmittel angereicherten Lösungsmittel an Farbmittel abgereicherten Lösungsmittels.

11. Verfahren zur Verfärbung nach einem der Ansprüche 1 bis 10, umfassend das zumindest teilweise Rückführen des in (iv-a) erhaltenen, an Farbmittel abgereicherten Lösungsmittels und/oder des in (iii) erhaltenen abgetrennten, an Farbmittel angereicherten Lösungsmittels zu (i).

12. Verfahren zur Verfärbung nach einem der Ansprüche 1 bis 11, umfassend

(iv-b) das Waschen des in (iii) erhaltenen abgetrennten Polymermaterials mit einem Waschlösungsmittel, das gamma-Valerolacton und gegebenenfalls ein oder mehrere aus der aus Wasser und organischen Lösungsmitteln mit einem log$K_{OW}$ im Bereich von -1,6 bis +1,6 bestehenden Gruppe ausgewählte Lösungsmittel umfasst, unter Erhalt eines ersten gewaschenen, im Vergleich zu dem in (i) bereitgestellten Polymermaterial an Farbmittel abgereicherten Polymermaterials;

(iv-c) gegebenenfalls das Waschen des in (iv-b) erhaltenen ersten gewaschenen, im Vergleich zu dem in (i) bereitgestellten Polymermaterial an Farbmittel abgereicherten Polymermaterials, unter Erhalt eines zweiten gewaschenen, im Vergleich zu dem in (i) bereitgestellten Polymermaterial an Farbmittel abgereicherten Polymermaterials;

(iv-d) gegebenenfalls das Trocknen des ersten gewaschenen, im Vergleich zu dem in (i) bereitgestellten Polymermaterial an Farbmittel abgereicherten Polymermaterials oder des zweiten gewaschenen, im Vergleich zu dem in (i) bereitgestellten Polymermaterial an Farbmittel abgereicherten Polymermaterials;

wobei gegebenenfalls (iv-b) und/oder (iv-c) mindestens einmal wiederholt werden, bevor (iv-d) durchgeführt wird.

13. Verfahren zur Verfärbung nach einem der Ansprüche 1 bis 12, wobei das Polymermaterial auf Polyethylenterephthalat(PET)-Basis, das im Bereich von 30 bis 100 Gew.-% PET umfasst, ein oder mehrere weitere aus der aus Polyacrylnitril (PAN), Polyamid (PA), Polybutylenterephthalat (PBT), Polytetramethylenetherglykol (Poly-THF), Polyurethan (PU), Polyethylenglykol (PEG), Polypropylenglykol (PPG), Polyglykolsäure (PGA), Polystyrol (PS), Styrol-Butadien-Kautschuk (SBR), Polyvinylchlorid (PVC), Polyethersulfon (PES), Polyetheretherketon (PEEK), Polyethylennaphthalat (PEN), Polycarbonat (PC), Polymilchsäure (PLA), Acrylnitril-Butadien-Styrol (ABS), Polyacrylsäuren und - estern (PAA) / Poly(methylmethacrylat) (PMMA), Polyoxymethylen (POM), Polycaprolacton (PCL), Polyethylenadipat (PEA), Polytrimethylenterephthalat (PTT), Polyhydroxyalkanoat (PHA) und Copolymeren aus zwei oder mehr dieser Polymermaterialien bestehenden Gruppe ausgewählte Polymere umfasst, wobei das Gesamtgewicht des Polymermaterials 100 Gew.-% beträgt.

14. Verfahren zur Herstellung einer Textile oder einer Verpackung, umfassend

(i) die Bereitstellung eines farbigen Polymermaterials und die Bereitstellung eines gamma-Valerolacton umfassenden Lösungsmittels;

(ii) das Inkontaktbringen des farbigen Polymermaterials mit einem gamma-Valerolacton umfassenden Lösungsmittel bei einer Temperatur im Bereich von 40 bis 160 °C unter Erhalt eines im Vergleich zu dem in (i) bereitgestellten Lösungsmittel an Farbmittel angereicherten Lösungsmittels und eines im Vergleich zu dem in (i) bereitgestellten farbigen Polymermaterial an Farbmittel abgereicherten Polymermaterials;

wobei das Polymermaterial ein Polymermaterial auf Polyethylenterephthalat (PET) -Basis ist, das im Bereich von 30 bis 100 Gew.-% PET umfasst, wobei das Gesamtgewicht des Polymermaterials 100 Gew.-% beträgt;

die Herstellung einer Textile oder einer Verpackung aus dem in (ii) bereitgestellten, an Farbmittel abgereicherten Polymermaterial.

15. Verfahren nach Anspruch 14, umfassend

(iii) das Abtrennen des mit Farbmittel gemäß (ii) angereicherten Lösungsmittels von dem an Farbmittel gemäß (ii) abgereicherten Polymermaterial, unter Erhalt eines abgetrennten, mit Farbmittel angereicherten Lösungsmittels und eines abgetrennten, im Vergleich zu dem in (i) bereitgestellten Polymermaterial an Farbmittel abgereicherten Polymermaterials;

(iv-a) gegebenenfalls das Abtrennen des Farbmittels und des in (iii) erhaltenen, mit dem Farbmittel angereicherten Lösungsmittels unter Erhalt eines im Vergleich zu dem in (ii) erhaltenen, mit dem Farbmittel angereicherten Lösungsmittel an Farbmittel abgereicherten Lösungsmittels;

(iv-b) gegebenenfalls das Waschen des in (iii) erhaltenen abgetrennten Polymermaterials mit einem Waschlösungsmittel, das gamma-Valerolacton und gegebenenfalls ein oder mehrere aus der aus Wasser und organischen Lösungsmitteln mit einem $\log K_{OW}$ im Bereich von -1,6 bis +1,6 bestehenden Gruppe ausgewählte Lösungsmittel umfasst, unter Erhalt eines ersten gewaschenen, im Vergleich zu dem in (i) bereitgestellten Polymermaterial an Farbmittel abgereicherten Polymermaterials;

(iv-c) gegebenenfalls das Waschen des in (iv-b) erhaltenen ersten gewaschenen, im Vergleich zu dem in (i) bereitgestellten Polymermaterial an Farbmittel abgereicherten Polymermaterials, unter Erhalt eines zweiten gewaschenen, im Vergleich zu dem in (i) bereitgestellten Polymermaterial an Farbmittel abgereicherten Polymermaterials;

(iv-d) gegebenenfalls das Trocknen des ersten gewaschenen, im Vergleich zu dem in (i) bereitgestellten Polymermaterial an Farbmittel abgereicherten Polymermaterials oder des zweiten gewaschenen, im Vergleich zu dem in (i) bereitgestellten Polymermaterial an Farbmittel abgereicherten Polymermaterials;

wobei gegebenenfalls (iv-b) und/oder (iv-c) mindestens einmal wiederholt werden, bevor (iv-d) durchgeführt wird; die Herstellung einer Textile oder einer Verpackung aus dem in (ii) bereitgestellten, an Farbmittel abgereicherten Polymermaterial aus dem in (iii) bereitgestellten abgetrennten, an Farbmittel abgereicherten Polymermaterial, aus dem in (iv-b) bereitgestellten ersten gewaschenen, an Farbmittel abgereicherten Polymermaterial, aus dem in (iv-c) bereitgestellten zweiten gewaschenen, an Farbmittel abgereicherten Polymermaterial und/oder aus dem in (ivd) bereitgestellten getrockneten zweiten gewaschenen, an Farbmittel abgereicherten Polymermaterial.

**Revendications**

1. Procédé de décoloration d'un matériau polymérique coloré comprenant :

   (i) fournir un matériau polymérique coloré et fournir un solvant comprenant de la gamma-valérolactone ;
   (ii) mettre en contact le matériau polymérique coloré avec un solvant comprenant de la gamma-valérolactone à une température dans la plage de 40 à 160 °C, obtenant ainsi un solvant, qui est enrichi en matière colorante par rapport au solvant fourni en (i), et un matériau polymérique, qui est appauvri en matière colorante par rapport au matériau polymérique coloré fourni en (i) ;

   dans lequel le matériau polymérique est un matériau polymérique à base de poly(téréphtalate d'éthylène) (PET), qui comprend dans la plage de 30 à 100 % en poids de PET, le poids total du matériau polymérique étant de 100 % en poids.

2. Procédé de décoloration selon la revendication 1, dans lequel la mise en contact en (ii) est effectuée à une pression dans la plage de 800 à 200 000 hPa.

3. Procédé de décoloration selon la revendication 1, dans lequel la mise en contact en (ii) est effectuée à une température dans la plage de 60 à 160 °C.

4. Procédé de décoloration selon l'une quelconque des revendications 1 à 3, dans lequel la mise en contact dans (ii) est effectuée à une température dans la plage de 60 à 160 °C et à une pression dans la plage de 800 à 1 200 hPa ; ou
   dans lequel la mise en contact dans (ii) est réalisée à une température dans la plage de 60 à 160 °C et à une pression dans la plage de 1 013 à 200 000 hPa.

5. Procédé de décoloration selon l'une quelconque des revendications 1 à 4, dans lequel le solvant comprend de la gamma-valérolactone et éventuellement un ou plusieurs solvants choisis dans le groupe constitué par l'eau et les solvants organiques ayant un log $K_{OW}$ dans la plage de -1,6 à +1,6, dans lequel au moins 1 % en poids du solvant est constitué de gamma-valérolactone, sur la base du poids total du solvant qui est de 100 % en poids.

6. Procédé de décoloration selon l'une quelconque des revendications 1 à 5, dans lequel le solvant comprend de l'eau et de la gamma-valérolactone, de préférence dans un rapport sur la base de la masse eau:gamma-valérolactone dans la plage de 1:10 à 10:1 ; et/ou, de préférence et, dans lequel la mise en contact dans (ii) est effectuée à une température dans la plage de 60 à 99 °C.

7. Procédé de décoloration selon l'une quelconque des revendications 1 à 5, dans lequel au moins 80 % en poids du solvant sont constitués de gamma-valérolactone, par rapport au poids total du solvant.

8. Procédé de décoloration selon l'une quelconque des revendications 1 à 7, dans lequel la mise en contact dans (ii) est effectuée avec un rapport sur la base de la masse matériau polymérique coloré:solvant dans la plage de 1:1 à 1:100.

9. Procédé de décoloration selon l'une quelconque des revendications 1 à 8, comprenant :
   (iii) la séparation du solvant enrichi en matière colorante tel qu'obtenu en (ii) du matériau polymérique, qui est appauvri en matière colorante tel qu'obtenu en (ii), obtenant ainsi un solvant séparé enrichi en matière colorante et un matériau polymérique séparé, qui est appauvri en matière colorante par rapport au matériau polymérique fourni en (i).

10. Procédé de décoloration selon l'une quelconque des revendications 1 à 9, comprenant :
    (iv-a) la séparation de la matière colorante et du solvant qui est enrichi en matière colorante obtenu en (iii), obtenant ainsi un solvant appauvri en matière colorante par rapport au solvant enrichi en matière colorante tel qu'obtenu en (ii).

11. Procédé de décoloration selon l'une quelconque des revendications 1 à 10, comprenant le recyclage du solvant appauvri en matière colorante tel qu'obtenu en (iv-a) et/ou du solvant séparé qui est enrichi en matière colorante obtenu en (iii) au moins partiellement en (i).

12. Procédé de décoloration selon l'une quelconque des revendications 1 à 11, comprenant

    (iv-b) lavage du matériau polymérique séparé obtenu en (iii) avec un solvant de lavage comprenant de la gamma-valérolactone et éventuellement un ou plusieurs solvant(s) choisi(s) dans le groupe constitué par l'eau et les solvants organiques ayant un $logK_{OW}$ dans la plage de -1,6 à +1,6, obtenant ainsi un premier matériau polymérique lavé, qui est appauvri en matière colorante par rapport au matériau polymérique fourni en (i) ;

(iv-c) éventuellement lavage du premier matériau polymérique lavé, qui est appauvri en matière colorante par rapport au matériau polymérique fourni en (i), obtenu en (iv-b), obtenant ainsi un second matériau polymérique lavé, qui est appauvri en matière colorante par rapport au matériau polymérique fourni en (i) ;

(iv-d) éventuellement séchage du premier matériau polymérique lavé, qui est appauvri en matière colorante par rapport au matériau polymérique fourni en (i) ou du second matériau polymérique lavé, qui est appauvri en matière colorante par rapport au matériau polymérique fourni en (i) ;

dans lequel éventuellement (iv-b) et/ou (iv-c) sont répétés au moins une fois avant que (iv-d) ne soit effectué.

13. Procédé de décoloration selon l'une quelconque des revendications 1 à 12, dans lequel le matériau polymérique à base de poly(téréphtalate d'éthylène) (PET), qui comprend dans la plage de 30 à 100 % en poids de PET, comprend un ou plusieurs autres polymères choisis dans le groupe constitué par polyacrylonitrile (PAN), polyamide (PA), poly(téréphtalate de butylène) (PBT), polyéther de tétraméthylèneglycol (Poly-THF), polyuréthane (PU), polyéthylène glycol (PEG), polypropylène glycol (PPG), acide polyglycolique (PGA), polystyrène (PS), caoutchouc styrène-butadiène (SBR), poly(chlorure de vinyle) (PVC), polyéthersulfone (PES), polyétheréthercétone (PEEK), poly(naphtalate d'éhylène) (PEN), polycarbonate (PC), acide polylactique (PLA), acrylonitrile butadiène styrène (ABS), acides et esters polyacryliques (PAA) / poly(méthacrylate de méthyle) (PMMA), polyoxyméthylène (POM), polycaprolactone (PCL), poly(adipate d'éthylène) (PEA), poly(téréphtalate de triméthylène) (PTT), polyhydroxyalcanoate (PHA), et copolymères de deux ou plusieurs de ces matériaux polymériques, dans lequel le poids total du matériau polymérique est de 100 % en poids.

14. Procédé de préparation d'un textile ou d'un emballage comprenant

(i) fournir un matériau polymérique coloré et fournir un solvant comprenant de la gamma-valérolactone ;

(ii) mettre en contact le matériau polymérique coloré avec un solvant comprenant de la gamma-valérolactone à une température dans la plage de 40 à 160 °C, obtenant ainsi un solvant, qui est enrichi en matière colorante par rapport au solvant fourni en (i), et un matériau polymérique, qui est appauvri en matière colorante par rapport au matériau polymérique coloré fourni en (i) ;

dans lequel le matériau polymérique est un matériau polymérique à base de poly(téréphtalate d'éthylène) (PET), qui comprend dans la plage de 30 à 100 % en poids de PET, le poids total du matériau polymérique étant de 100 % en poids ;

la préparation d'un textile ou d'un emballage à partir du matériau polymérique appauvri en matière colorante, fourni en (ii).

15. Procédé selon la revendication 14 comprenant

(iii) la séparation du solvant qui est enrichi en matière colorante tel qu'obtenu en (ii) du matériau polymérique, qui est appauvri en matière colorante tel qu'obtenu en (ii), obtenant ainsi un solvant séparé qui est enrichi en matière colorante et un matériau polymérique séparé, qui est appauvri en matière colorante par rapport au matériau polymérique fourni en (i) ;

(iv-a) éventuellement séparation de la matière colorante et du solvant qui est enrichi en matière colorante obtenu en (iii), obtenant ainsi un solvant appauvri en matière colorante par rapport au solvant enrichi en matière colorante tel qu'obtenu en (ii) ;

(iv-b) éventuellement lavage du matériau polymérique séparé obtenu en (iii) avec un solvant de lavage comprenant de la gamma-valérolactone et éventuellement un ou plusieurs solvant(s) choisi(s) dans le groupe constitué par l'eau et les solvants organiques ayant un $logK_{OW}$ dans la plage de -1,6 à +1,6, obtenant ainsi un premier matériau polymérique lavé, qui est appauvri en matière colorante par rapport au matériau polymérique fourni en (i) ;

(iv-c) éventuellement lavage du premier matériau polymérique lavé, qui est appauvri en matière colorante par rapport au matériau polymérique fourni en (i), obtenu en (iv-b), obtenant ainsi un second matériau polymérique lavé, qui est appauvri en matière colorante par rapport au matériau polymérique fourni en (i) ;

(iv-d) éventuellement séchage du premier matériau polymérique lavé, qui est appauvri en matière colorante par rapport au matériau polymérique fourni en (i) ou du second matériau polymérique lavé, qui est appauvri en matière colorante par rapport au matériau polymérique fourni en (i) ;

dans lequel éventuellement (iv-b) et/ou (iv-c) sont répétés au moins une fois avant que (iv-d) ne soit effectué ;

préparation d'un textile ou d'un emballage à partir du matériau polymérique appauvri en matière colorante fourni en (ii), du matériau polymérique séparé appauvri en matière colorante fourni en (iii), du premier matériau polymérique lavé appauvri en matière colorante fourni en (iv-b), du second matériau polymérique lavé appauvri en matière colorante fourni en (iv-c), et/ou du second matériau polymérique lavé séché appauvri en matière colorante fourni en (iv-d).

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 201612755 A1

- GB 2528494 A

**Non-patent literature cited in the description**

- **WENJUN CHEN ; YUECHAO YANG ; XUE LAN ; BAOLONG ZHANG ; XIAOGANG ZHANG ; TIAN-CHENG MU**. *Green Chem*, 2021, vol. 23, 4065
- **THEODORE W. WALKER ; NATHAN FRELKA ; ZHIZHANG SHEN ; ALEX K. CHEW ; JESSE BANICK ; STEVEN GREY ; MIN SOO KIM ; JAMES A. DUMESIC ; REID C. VAN LEHN ; GEORGE W. HUBER**. *Sci. Adv*, 20 November 2020, vol. 6, eaba7599
- **METIN AGIKYILDIZ ; KÜBRA GÜNES ; AHMET GÜRSES**. Dyes and Pigments. Springer, 2016
- **KLAUS HUNGER ; THOMAS HEBER ; MARTIN U. SCHMIDT ; FRIEDRICH REISINGER**. Industrial Organic Pigments. Stefan Wanne Wiley-VCH, 2018
- **ASHIS KUMAR SAMANTA ; NASSER AWWAD**. Chemistry and Technology of Natural and Synthetic Dyes and Pigments. *IntechOpen*, 2020, ISBN 9781789859980
- **GERHARD PFAFF ; DE GRUYTER**. *Encyclopedia of Color, Dyes, Pigments*, 2021, ISBN 311058588X
- **HEINRICH ZOLLINGER**. Color Chemistry: Syntheses, Properties, and Applications of Organic Dyes and Pigments. WILEY-VCH Verlag, 2003
- Industrial Dyes: Chemistry, Properties, Applications. WILEY-VCH Verlag, 2003

- **HERMANN RATH**. Lehrbuch der Textilchemie. einschl. der textilchemischen Technologie. Springer-Verlag, 1963
- **WILFRIED KRATZERT ; RASMUS PEICHERT**. Farbstoffe. Quelle & Meyer
- Ullmann's Encyclopedia of industrial chemistry. Wiley-VCH, 2000
- **THEODORE W. WALKER ; NATHAN FRELKA ; ZHIZHANG SHEN ; ALEX K. CHEW ; JESSE BANICK ; STEVEN GREY ; MIN SOO KIM ; JAMES A. DUMESIC ; REID C. VAN LEHN ; GEORGE W. HUBER**. *Sci. Adv.*, 20 November 2020, vol. 6, eaba7599
- **METIN AGIKYILDIZ ; KÜBRA GÜNES**. Dyes and Pigments. Ahmet Gürses Springer, 2016
- **KLAUS HUNGER ; THOMAS HEBER ; MARTIN U. SCHMIDT ; FRIEDRICH REISINGER ; STEFAN WANNE**. Industrial Organic Pigments. Wiley-VCH, 2018
- **ASHIS KUMAR SAMANTA ; NASSER AWWAD**. Chemistry and Technology of Natural and Synthetic Dyes and Pigments. *IntechOpen*, 2020, ISBN 9781789859980, 9781789859973, 9781839687587
- **GERHARD PFAFF ; DE GRUYTER**. *Encyclopedia of Color, Dyes, Pigments*, 2021, vol. 1, ISBN 311058588X
- **WILFRIED KRATZERT ; RASMUS PEICHERT**. Farbstoffe. Quelle & Meyer, 1981